# EUROPÄISCHE PATENTSCHRIFT

(11) **EP 1 568 122 B1**
(45) Veröffentlichungstag und Bekanntmachung des Hinweises auf die Patenterteilung: **10.10.2018**
(21) Anmeldenummer: 03773416.7
(22) Anmeldetag: 02.12.2003
(51) Int. Cl.: H02P 1/44

(54) **VORRICHTUNG UND VERFAHREN ZUM REDUZIEREN DER STROMAUFNAHME WÄHREND DES ANLAUFENS EINES EINPHASEN-WECHSELSTROM-ASYNCHRON-MOTORS**
DEVICE AND METHOD FOR REDUCING THE CURRENT CONSUMPTION DURING THE STARTING PROCESS OF A SINGLE-PHASE A.C. ASYNCHRONOUS MOTOR
DISPOSITIF ET PROCEDE PERMETTANT DE REDUIRE LA CONSOMMATION DE COURANT AU DEMARRAGE D'UN MOTEUR ASYNCHRONE A COURANT ALTERNATIF MONOPHASE

(30) Priorität: 02.12.2002 CH 202802
(43) Veröffentlichungstag der Anmeldung: 31.08.2005
(73) Patentinhaber: Weigel, Roland, 9652 Neu St. Johann (CH)
(72) Erfinder: Weigel, Roland, 9652 Neu St. Johann (CH)
(74) Vertreter: Hepp Wenger Ryffel AG
(86) Internationale Anmeldenummer: PCT/CH2003/000797
(87) Internationale Veröffentlichungsnummer: WO 2004/051837

(56) Entgegenhaltungen:
- EP-A- 0 590 592
- EP-A2- 1 100 190
- DE-A- 2 819 154
- DE-A- 3 105 444
- FR-A- 2 484 729
- GB-A- 2 292 847
- US-A- 3 303 402

## Beschreibung

Die Erfindung betrifft eine Vorrichtung und ein Verfahren zum Reduzieren der Stromaufnahme während des Anlaufens eines Einphasen-Wechselstrom-Asynchron-Motors gemäss des Oberbegriffs der unabhängigen Patentansprüche.

Die Begrenzung des Anlaufstroms von induktiven oder kapazitiven Verbrauchen ist ein altbekanntes Problem, dessen Lösung auf die verschiedenste Weise angestrebt wird. Oft wird während der Anlaufphase ein zusätzlicher Anlauf-Widerstand verwendet, welcher die Stromaufnahme begrenzt. Ähnliche Massnahmen sind beim Abschalten bekannt, um Strom- oder Spannungsspitzen zu vermeiden.

Zusätzlich zu industriellen Anwendern belasten eine grosse Anzahl privater Haushalte das öffentliche Stromnetz durch übermässige Stromaufnahme für Geräte wie Kühlschränke oder Klimaanlagen. Die Kompressoren von solchen Geräten werden oft ein- und ausgeschaltet, so dass das öffentliche Netz häufig belastet wird. Unerwünschte Netzspannungsschwankungen sind die Folgen.

Zur Verringerung des Anlaufstroms wurden bisher Motoren mit einer Haupt- und einer Hilfswicklung verwendet, wobei ein Kondensator zwischen die Spannungsquelle und die Hilfswicklung geschaltet war. Während der Anlaufphase wurde der Kondensator und die Hilfswicklung mittels eines Relais wirksam geschaltet und nach Ablauf der Anlaufphase ausgeschaltet. Solche Vorrichtungen sind mit dem Nachteil behaftet, dass durch das Ein- bzw. Ausschalten des Relais unzulässige Stromspitzen erzeugt werden.
Die DE 28 48 281 zeigt eine Steuervorrichtung zur Reduktion des Anlaufstroms bei welcher zunächst in einer ersten Zeitspanne Haupt- und Hilfswicklung voll an die Netzspannung gelegt werden. Damit fliesst durch Haupt- und Hilfswicklung maximaler Strom. Dies führt nicht nur zu einer unerwünschten Einschalt-Stromspitze sondern dazu, dass der Rotor durch den Maximal-Strom im Ruhezustand praktisch blockiert wird. Alternativ ist auch schon vorgeschlagen worden, einen Heissleiter derart anzuordnen, dass sowohl der Strom durch die Hauptwicklung als auch der Strom durch die Hilfswicklung im Einschaltmoment reduziert wird. Dies reduziert einerseits zwar den maximalen Strom durch die Hauptwicklung, andererseits wird aber auch der Strom durch die Hilfswicklung begrenzt, womit das Anlaufverhalten verschlechtert wird. Nach dem Ende des Anlaufvorgangs wird bei bekannten Anordnungen der Heissleiter überbrückt und unwirksam gemacht.

EP1100190 A zeigt ein Verfahren bzw. ein Vorrichtung zum Reduzieren der Stromaufnahme eines Motors während des Anlaufens mit einer Hilfswicklung und einer Hauptwicklung, sowie einem schaltbaren Heissleiter in Serie mit der Hauptwicklung und einem schaltbaren Anlaufkondensator in in Serie mit der Hilfswicklung.

US3303402 A zeigt ein weiteres Verfahren bzw. Vorrichtung zum Reduzieren der Stromaufnahme eines Motors während des Anlaufens. Die Erfindung stellt sich zur Aufgabe, die Nachteile des Bekannten zur vermeiden, insbesondere also eine Vorrichtung zum Begrenzen der Stromaufnahme während des Anlaufens eines Einphasen-Wechselstrom-Asynchron-Motors zu schaffen, bei welchem einerseits der Anlaufstrom reduziert wird und andererseits Anlaufverhalter verbessert wird. Insbesondere soll zu hoher Strom durch die Hauptwicklung verhindert und damit ein Blockieren des Rotors im Stillstand vermieden werden. Gleichzeitig soll die Wirkung der Hilfswicklung verstärkt und das Anlaufdrehmoment vergrössert werden.
Erfindungsgemäss wird dies mit einer Vorrichtung gemäss den Merkmalen der unabhängigen Ansprüche erreicht.

Der Anlaufstrom eines Einphasen-Wechselstrom-Motors kann beim Stand der Technik dadurch begrenzt werden, dass während der ganzen Anlaufphase ein Heissleiter der Hauptwicklung und der Hilfswicklung vorgeschaltet ist. Mit einer solchen Konfiguration lässt sich zwar der Anlaufstrom reduzieren einzelne Stromspitzen lassen sich jedoch nicht eliminieren. Ausserdem wird dadurch das Feld der Hilfwicklung beschränkt. Es hat sich nun gezeigt, dass der Anlaufstrom wirksam um ein vielfaches reduziert werden kann, wenn nur der Hauptwicklung eines Einphasen-Wechselstrom-Motors während der Anlaufphase ein Heissleiter vorgeschaltet wird und wenn der Hilfswicklung ein Kondensator vorgeschaltet wird, welcher direkt mit der Spannungsquelle verbunden ist. Es hat sich herausgestellt, dass durch eine Anordnung, bei welcher die Hilfswicklung nicht über einen Heissleiter mit der Spannungsquelle verbunden ist, der Anlaufstrom bei geeigneter Dimensionierung der einzelnen Komponenten wenigstens auf einen Drittel des Stroms bei blockiertem Rotor gesenkt werden kann.

Wird dem Anlaufkondensator ein Kaltleiter mit einem Anfangswiderstand im kalten Zustand vorgeschaltet, lassen sich sogar die durch den Anlaufkondensator entstehenden kapazitiven Stromspitzen im Anlauf beschränken. Die thermische Charakteristik des Kaltleiters kann dabei so gewählt werden, dass mit zunehmender Erwärmung des Kaltleiters während der Anlaufphase der Widerstandswert des Kaltleiters ansteigt und damit die Wirkung des Anlaufkondensators zunehmend reduziert wird.

Alternativ ist es möglich, dem Anlaufkondensator einen Heissleiter vorzuschalten, wodurch die kapazitiven Stromspitzen im Anlauf sehr gut beschränkt werden. Durch die Erwärmung dieses Heissleiters wird der Stromfluss durch den Anlaufkondensator kontinuierlich erhöht.

Von Anfang des Einschaltvorgangs an wird der Heissleiter in Serie mit der Hauptwicklung des Motors geschaltet. Der Heissleiter ist am Anfang der Anlaufphase kühl und weist einen maximalen Widerstand auf. Dadurch, dass Strom durch den Heissleiter fliesst, wird seine Temperatur erhöht und sein Widerstand nimmt bis zum Erreichen eines thermischen Gleichgewichts kontinuierlich ab. Nach Erreichen der Nenndrehzahl des Motors wird der Heissleiter vorteilhafterweise mit einem Leistungsschalter überbrückt, so dass er nicht mehr von Strom durchflossen ist. Der Heissleiter kann sich dadurch abkühlen und seinen ursprünglichen, maximalen Widerstand erreichen. Durch das Abkühlen wird der Heissleiter für einen erneuten Einschaltvorgang vorbereitet.
Auch der Kaltleiter, der in Serie zum Anlauf-Kondensator liegt, wird zweckmässig abgeschaltet, wenn die Wirkung des Anlaufkondensators nicht mehr erforderlich ist. Danach wird die Phasenverschiebung der Hilfswicklung gegenüber der Hauptwicklung nur mehr durch einen Betriebskondensator bewirkt..Der Betriebskondensator kann entweder Bestandteil der vorliegenden Vorrichtung sein oder aber auch Teil des Motors. Derartige Kondensatoren sind Stand der Technik; sie werden in der Regel vom Motorenhersteller mitgeliefert, sind im Motorengehäuse oder im Anschlussbereich eingebaut oder sie werden zum externen Anschliessen mitgeliefert oder in Betriebsanleitungen vorgeschrieben. Erfindungsgemäß wird zuerst der Kaltleiter in der Hilfswicklung vom Stromkreis getrennt und dann erst der Heissleiter in der Hauptwicklung über einen Schalter überbrückt.
Wenn anstelle eines Kaltleiters ein Heissleiter vor dem Anlaufkondensator in die Hilfswicklung geschaltet wird, wird dieser bei Erreichen der Nenndrehzahl des Motors als erstes ausgeschaltet. Dadurch wird ein starkes Ansteigen des Stromverbrauchs im Anlaufkondensator vermieden. Als zweites wird der Heissleiter in der Hauptwicklung überbrückt. Die Nenndrehzahl ist üblicherweise dann erreicht, wenn der Rotor-Schlupf des Motors gegen null strebt.
In Abhängigkeit von der Induktivität von Haupt- und Hilfswicklung kann der Anlaufstrom durch die Wahl einer geeigneten Kapazität minimiert werden. Dabei ist ein Idealwert für die Kapazität zu beachten.
Im Hinblick auf eine Erhöhung der Phasenverschiebung zwischen Haupt- und Hilfswicklung während des Anlaufs ist es vorteilhaft, wenn der Anlaufkondensator grösser ist als der Betriebskondensator. Bevorzugt ist der Kapazitätswert des Anlaufkondensators zwei- bis fünfmal so gross, vorzugsweise drei- bis fünfmal so gross wie der Betriebskondensator.
Je nach Leistungsaufnahme und Impedanzwert der Hauptwicklung haben sich Heissleiter bewährt, die einen Kaltwiderstand von 10 bis 30 Ω aufweisen. Als Kapazitäts-Wert für den Betriebskondensator haben sich Kapazitätswerte von 35 bis 50 µF bewährt. Für den Anlaufkondensator werden Kapazitätswerte zwischen 80 und 150 vorzugweise um 100 µF eingesetzt. Dabei haben sich vor allem eine Kombination mit diesen KapazitätsWerten für den Kaltleiter Kaltwiderstände zwischen 10 und 25 Ω vorzugsweise zwischen 15 und 20 Ω bewährt, um eine wirksame Begrenzung der kapazitiven Stromspitzen durch den Anlauf-Kondensator im Einschaltmoment zu erreichen.

Die erfindungsgemässe Vorrichtung weist ausserdem eine Steueranordnung auf, die das zeitabhängige Zuschalten bzw. Abschalten der Schalter bewirkt.

In einem Beispiel ausserhalb der beanspruchten Erfindung kann dieselbe Anordnung auch zum Begrenzen von Stromspitzen verwendet werden, die beim Ausschalten des Motors entstehen können. Beim Ausschalten kann der Heissleiter wirksam in Serie geschaltet und anschliessend die Stromzufuhr zum Motor unterbrochen werden.
Die Erfindung ist im folgenden in Ausführungsbeispielen anhand der Zeichnung näher erläutert. Es zeigen:
- Figur 1a: die schematische Darstellung einer Schaltungsanordnung mit den Merkmalen der Erfindung, und
- Figur 1b: schematische Darstellung einer alternativen Schaltungsanordnung mit den Merkmalen der Erfindung
- Figur 2a bis 2c 2a),: den Stromverlauf gemessen an der Hauptwicklung (Fig. der Hilfswicklung (Fig. 2b) sowie die Gesamt-Stromaufnahme (Fig. 2c) bei einem Motor gemäss der Schaltungsanordnung aus Figur 1a.

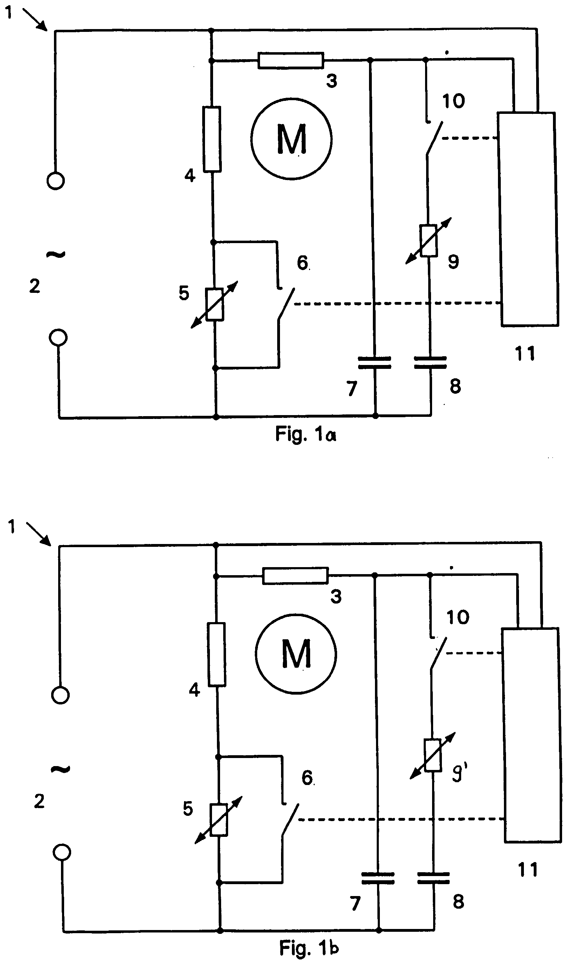

Figur 1a zeigt schematisch eine Vorrichtung 1 zum Reduzieren der Stromaufnahme eines Einphasen-Wechselstrom-Asynchron-Motors M mit den Merkmalen der Erfindung. Der Motor ist an eine Spannungsquelle 2 legbar. Die Spannungsquelle kann z.B. eine Spannungversorgung im Haushalt mit einem Wechselstrom von ca. 230 oder 110 Volt sein. Der Motor M weist eine Hilfswicklung 3 und eine Hauptwicklung 4 auf, wobei die Hilfswicklung 3 in Serie mit einem Betriebs-Kondensator 7 mit der Spannungsquelle 2 verbunden ist. Die Hauptwicklung ist in Serie mit einem Heissleiter 5 mit der Spannungsquelle 2 verbunden. Ein Leistungsschalter 6 dient dazu, den Heissleiter 5 nach Ablauf der Anlaufphase des Motors zu überbrücken. Dies ermöglicht eine Abkühlung des Heissleiters 5. Die Hilfswicklung 3 und die Hauptwicklung 4 der Heissleiter 5 weist vorzugsweise einen Kaltwiderstand von 10 bis 30 Ω auf, um den Anlaufstrom wirksam zu reduzieren. Vorzugsweise werden dabei mehrere Einzel-Heissleiter in Serie geschaltet.
Dadurch lässt sich die von einem einzelnen Heissleiter aufgenommene Leistung reduzieren z.B. lassen sich vier bis acht NTC-Widerstände von 2 oder 4 Ω in Serie schalten. Die Reduktion der Stromaufnahme und die Erzeugung eines starken Hilfsfeld während der Anlaufphase hängt auch von der Dimensionierung des Anlauf-Kondensators 8 ab. Je nach Induktivität der Haupt- und der Hilfswicklung sowie der Motorleistung während der Anlaufphase ergeben unterschiedlich Kapazitäten einen optimalen Wert. Bewährt hat es sich, wenn der Anlaufkondensator 8 jedenfalls grösser ist als der Betriebskondensator 7.
Vorzugsweise beträgt sein Kapazitätswert wenigstens das doppelte, vorzugsweise das drei bis fünffache des Betriebskondensators. Um kapazitive Stromspitzen durch den Anlaufkondensator zu verringern ist es zweckmässig einen Kaltleiter 9 mit dem Anlaufkondensator in Serie zu einer AnlaufSchaltung zu schalten. Der Kaltwiderstand des Kaltleiters beträgt vorzugsweise zwischen 15 und 50 Ω bevorzugt 25 bis 35 Ω.

Wie aus Figur 1b ersichtlich, kann der Kaltleiter 9 durch einen weiteren Heissleiter 9' ersetzt werden. Dadurch wird der Strom auf den Anlaufkondensator 8 am Anfang der Einschaltphase verringert. Wenn der Rotor-Schlupf gegen null strebt, werden der Anlaufkondensator 8 und der dazu vorgeschaltete Heissleiter 9' durch den Schalter 10 vom Stromkreis getrennt. Die Phasenverschiebung in der Hilfswicklung wird von diesem Zeitpunkt an durch den Kondensator 7 erzeugt, dessen Kapazitätswert rund 3 bis 5 mal kleiner ist als jener der Anlaufkondensators 8. Anschliessend wird der Heissleiter 5 mit dem Schalter 6 überbrückt.

Erfindungsgemäß ist ausserdem eine Steueranordnung 11 vorgesehen, die sowohl den Heissleiter in Serie mit der Hauptwicklung als auch die Anlaufschaltung bestehend aus Anlaufkondensator und Kaltleiter zu einem entsprechenden Zeitpunkt der Anlaufphase überbrückt.

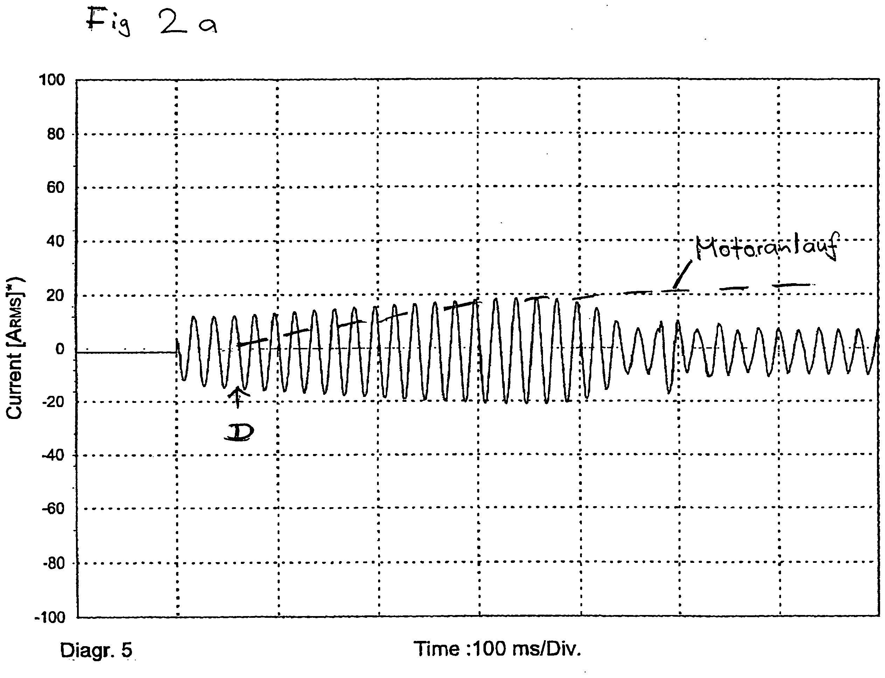

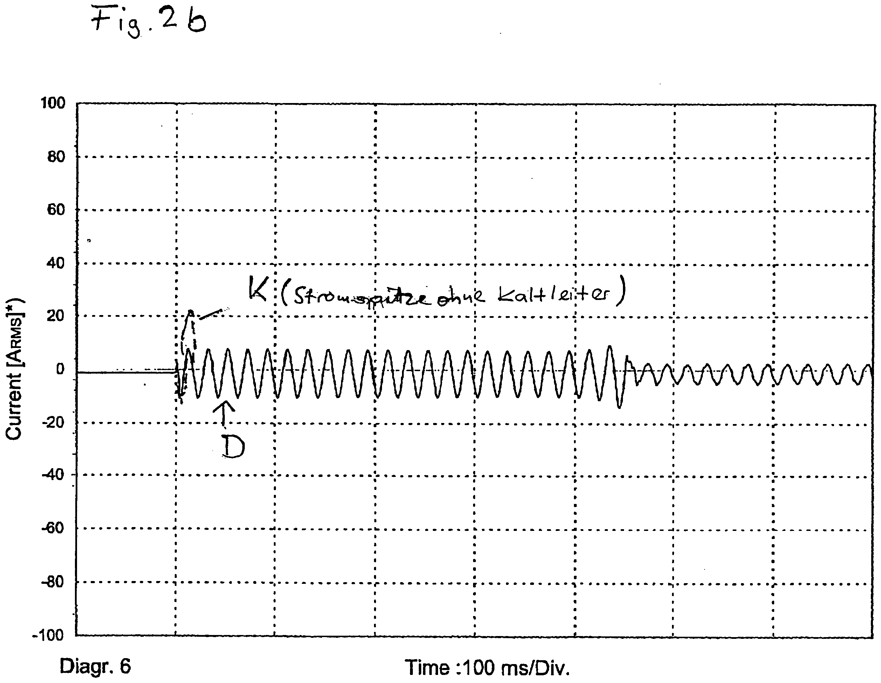

Figur 2a zeigt den Stromverlauf an den Anschlüssen 2 der Spannungsquelle. Zusätzlich ist bei "K" der Einfluss des Kaltleiters 9 angedeutet, der im Anlauf-Moment die kapazitiven Stromspitzen durch den Anlaufkondensator 8 reduziert. Figur 2b zeigt den Stromverlauf durch die Hilfswicklung 3. Auch dort ist die Begrenzung der kapazitiven Stromspitzen durch den Anlaufkondensator 8 mittels des Anfangswiderstands des Kaltleiters 9 mit "K" angedeutet.

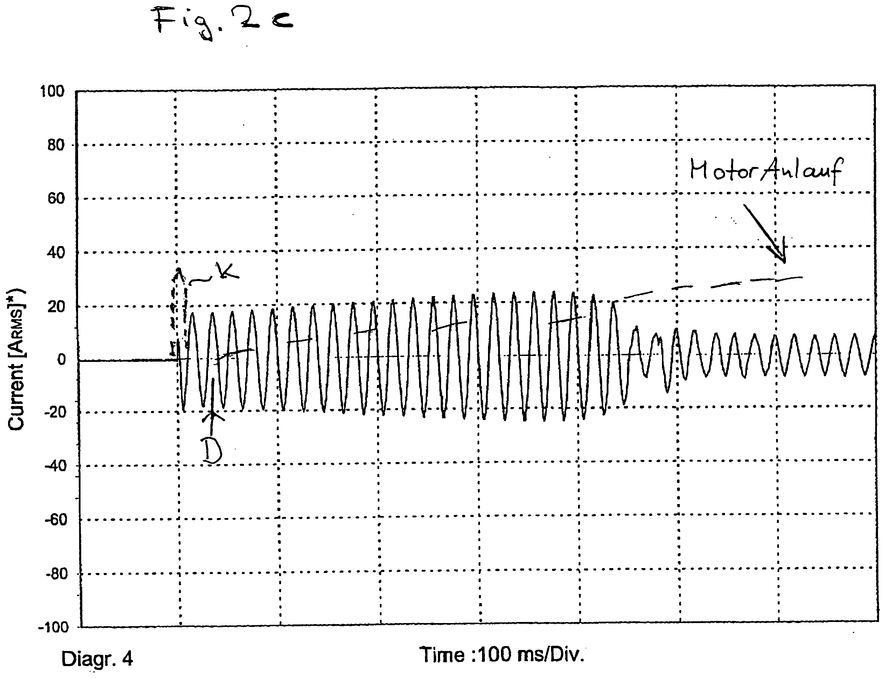

Figur 2c zeigt den Stromverlauf durch die Hauptwicklung 3. Während der gesamten Einschaltphase wird der Strom wirksam durch den Heissleiter 5 begrenzt. Bei "D" ist angedeutet, dass sich der Rotor des Motors beginnt zu drehen. Bei "S" ist das Ende der Einschaltphase angedeutet. Wie aus dem Kurvenverlauf ersichtlich ist, wird während des gesamten Anlaufs der Strom durch Hauptwicklung 4 wirksam durch den Heissleiter 5 begrenzt. Der Widerstand des Heissleiters 5 nimmt kontinuierlich ab, während der Widerstandswert von Hauptwicklung 4 und Hilfswicklung 3 mit einsetzenden Anlauf kontinuierlich zunimmt. Damit ist gewährleistet, dass die grosse Stromaufnahme während der Einschaltphase einschliesslich der Stromspitzen durch Anlaufkondensatoren auf ein Mass reduziert, dass Überbelastung der Versorgungsnetze vermeidet. Dadurch wird auch erreicht, dass der Motor nicht durch übermässig grosse Stromaufnahme im Ruhezustand blockiert. Vermieden werden sowohl die transienten Einschaltströme die sich aus den Magnetisierungs/Ummagnetisierungsvorgang ergeben und die eine Amplitude vom 20fachen Wert des Nennstroms während der Dauer einer Halbwelle erreichen können.

Bewährt hat es sich, wenn im Einschaltzeitpunkt die Klemmenspannung an der Hauptwicklung durch Dimensionierung des Heissleiters ca. 10 bis 20% beträgt. Erst durch den fliessenden Anlaufstrom erwärmt sich der Heissleiter, er wird nieder und lässt die Klemmenspannung an der Hauptwicklung auf ca. ein Drittel der Nennspannung ansteigen. Jetzt die beginnt die Beschleunigung auf Nenndrehzahl, der Rotor-Schlupf geht gegen Null und der Anlaufstrom geht in den Betriebsstrom über. Der Heissleiter kann jetzt überbrückt werden.

Die Hilfswicklung liegt dagegen im Einschaltzeitpunkt an der Anlaufschaltung bestehend aus Kaltleiter und Anlaufkondensator. Der Kaltleiter verhindert durch sein Kaltwiderstand im Einschaltzeitpunkt die Stromspitzen und die Rückwirkung des Anlaufkondensators.

Besonders in der Kombination der beiden Begrenzungs-Massnahmen im Kreis von Hauptwicklung und Nebenwicklung lässt sich damit einfacher und schneller Anlauf einerseits erreichen und andererseits werden Stromspitzen und negative Rückwirkungen auf das Versorgungsnetz vermieden.

## Patentansprüche

1. Vorrichtung zum Reduzieren der Stromaufnahme während des Anlaufens eines Einphasen-Wechselstrom-Asynchron-Motors (M), mit einer Hilfswicklung (3) und einer Hauptwicklung (4), welche Vorrichtung einen in Serie mit der Hauptwicklung (4) schaltbaren ersten Heissleiter (5) aufweist, wobei der erste Heissleiter (5) zur Begrenzung des Anlaufstroms durch die Hauptwicklung (4) bei Beginn des Einschaltvorgangs wirksam in Serie zur Hauptwirkung schaltbar ist und wobei der erste Heissleiter (5) den Strom durch die Hilfswicklung (3) nicht begrenzt, wobei ein Anlauf-Schaltkreis (8, 9 bzw. 8, 9') mit einem Anlauf-Kondensator (8) zum Erzeugen einer Phasenverschiebung in der Hilfswicklung (3) mit der Hilfswicklung (3) schaltbar verbunden ist, wobei ein erster Schalter (6) zum Überbrücken des ersten Heissleiters (5) nach Abschluss des Anlaufvorgangs vorgesehen ist, wobei ein zweiter Schalter (10) zum Abschalten des Anlaufschaltkreises (8, 9 bzw. 8, 9') vorgesehen ist, wobei eine Steueranordnung (11) zum zeitabhängigen Zu- bzw. Abschalten des ersten und zweiten Schalters (6, 10) vorgesehen ist, **dadurch gekennzeichnet, dass** im Anlauf-Schaltkreis in Serie zum Kondensator (8) ein Kaltleiter (9) oder ein zweiter Heissleiter (9') zur Begrenzung kapazitiver Stromspitzen durch den Anlauf-Kondensator (8) vorgesehen ist, und dass die Steueranordnung (11) so ausgelegt ist, dass der zweite Schalter (10) vor dem ersten Schalter (6) betätigbar ist.

2. Vorrichtung nach Anspruch 1, mit einem Betriebskondensator (7) zur Erzeugung einer Phasenverschiebung in der Hilfswicklung (3) gegenüber der Hauptwicklung (4) im Betriebszustand, **dadurch gekennzeichnet, dass** die Kapazität des Anlaufkondensators (8) so dimensioniert ist, dass sein Kapazitätswert grösser ist als der Kapazitätswert des Betriebskondensators (7).

3. Vorrichtung nach Anspruch 2, **dadurch gekennzeichnet, dass** der Kapazitätswert des Anlaufkondensators (8) wenigstens zweimal so gross ist wie der Kapazitätswert des Betriebskondensators (7).

4. Vorrichtung nach Anspruch 2, **dadurch gekennzeichnet, dass** der Kapazitätswert des Anlaufkondensators (8) drei- bis fünfmal so gross ist wie der Kapazitätswert des Betriebskondensators (7).

5. Vorrichtung nach einem oder mehreren der vorangehenden Ansprüche, **dadurch gekennzeichnet, dass** der erste Heissleiter (5) einen Kaltwiderstand von 10 bis 30 Ω aufweist.

6. Verfahren zum Reduzieren des Anlaufstroms beim Einschalten eines Einphasen-Wechselstrom-Asynchron-Motors (M), wobei beim Einschalten der Strom durch eine Hauptwicklung des Motors durch einen ersten Heissleiter (5) reduziert wird, wobei durch einen Anlaufkondensator (8) eine Anlauf-Phasenverschiebung in einer Hilfswicklung (3) des Motors während des Anlaufvorgangs erzeugt wird und dass durch einen Widerstand der Strom durch den Anlaufkondensator (8) im Moment des Einschaltens reduziert wird und nach dem Anlaufen des Motors, der erste Heissleiter (5) mittels eines ersten Schalters (6) überbrückt wird, **dadurch gekennzeichnet, dass** das Überbrücken bei Erreichen der Nenndrehzahl erfolgt und der Widerstand und der Anlaufkondensator (8) bei Erreichen des Nennbetriebs mittels eines zweiten Schalters (10) vom Stromkreis getrennt werden, bevor der erste Heissleiter (5) mittels des ersten Schalters (6) überbrückt wird.

7. Verfahren nach Anspruch 6, **dadurch gekennzeichnet, dass** bei Erreichen der Nenndrehzahl der Rotor-Schlupf des Motors gegen null strebt.

8. Verfahren nach Anspruch 6 oder 7, **dadurch gekennzeichnet, dass** während des Anlaufvorgangs der Strom durch die Hauptwicklung (4) fortlaufend erhöht wird, während der Strom über den Anlaufkondensator (8) und der Grad der Phasenverschiebung durch den Anlaufkondensator (8) zunehmend verringert wird.

9. Verfahren nach einem der Ansprüche 8 bis 10, **dadurch gekennzeichnet, dass** der Widerstand durch einen Kaltleiter (9) oder einen zweiten Heissleiter (9') gebildet wird.

## Claims

1. Apparatus for reducing the current drawn during starting of a single-phase AC asynchronous motor (M), having an auxiliary winding (3) and having a main winding (4), which apparatus has a first NTC thermistor (5) which can be connected in series with the main winding (4), wherein the first NTC thermistor (5) can effectively be connected in series with the main winding at the start of the switching-on process in order to limit the starting current through the main winding (4), and wherein the first NTC thermistor (5) does not limit the current through the auxiliary winding (3), wherein a starting circuit (8, 9 or 8, 9') with a starting capacitor (8) for producing a phase shift in the auxiliary winding (3) is connected to the auxiliary winding (3) in a switchable manner, wherein a first switch (6) is provided in order to bridge the first NTC thermistor (5) after completion of the starting process, wherein a second switch (10) is provided in order to switch off the starting circuit (8, 9 or 8, 9'), wherein a control arrangement (11) is provided in order to switch the first and second switches (6, 10) on and off as a function of time, **characterized in that** a PTC thermistor (9) or a second NTC thermistor (9') for limiting capacitive current surges through the starting capacitor (8) is provided in series with the capacitor (8) in the starting circuit, and **in that** the control arrangement (11) is designed such that the second switch (10) can be operated before the first switch (6).

2. Apparatus according to Claim 1, having an operating capacitor (7) for producing a phase shift in the auxiliary winding (3) with respect to the main winding (4) in the operating state, **characterized in that** the capacitance of the starting capacitor (8) is of such a magnitude that its capacitance value is greater than the capacitance value of the operating capacitor (7).

3. Apparatus according to Claim 2, **characterized in that** the capacitance value of the starting capacitor (8) is at least twice as great as the capacitance value of the operating capacitor (7).

4. Apparatus according to Claim 2, **characterized in that** the capacitance value of the starting capacitor (8) is three to five times as great as the capacitance value of the operating capacitor (7).

5. Apparatus according to one or more of the preceding claims, **characterized in that** the first NTC thermistor (5) has a cold resistance of from 10 to 30 Ω.

6. Method for reducing the starting current on switching on a single-phase AC asynchronous motor (M), wherein, on switching on, the current through a main winding of the motor is reduced by means of a first NTC thermistor (5), wherein a starting capacitor (8) produces a starting phase shift in an auxiliary winding (3) of the motor during the starting process, and that a resistor reduces the current through the starting capacitor (8) at the moment of being switched on and the first NTC thermistor (5) is bridged by means of a first switch (6) after starting of the motor, **characterized in that** bridging takes place on reaching the rated speed and the resistor and the starting capacitor (8) are disconnected from the circuit by means of a second switch (10) on reaching rated operation, before the first NTC thermistor (5) is bridged by means of the first switch (6).

7. Method according to Claim 6, **characterized in that** the rotor slip of the motor tends to zero on reaching the rated speed.

8. Method according to Claim 6 or 7, **characterized in that** the current through the main winding (4) is increased continuously during the starting process, while the current through the starting capacitor (8) and the degree of phase shift produced by the starting capacitor (8) are increasingly reduced.

9. Method according to one of Claims 8 to 10, **characterized in that** the resistor is formed by a PTC thermistor (9) or a second NTC thermistor (9').

## Revendications

1. Dispositif de réduction de la consommation de courant lors du démarrage d'un moteur asynchrone à courant alternatif monophasé (M), comportant un enroulement auxiliaire (3) et un enroulement principal (4), lequel dispositif comporte une première thermistance (5) pouvant être commutée en série avec l'enroulement principal (4), dans lequel la première thermistance (5) destinée à limiter le flux de courant à travers l'enroulement principal (4) au début de la mise en marche peut être effectivement commutée en série avec l'enroulement principal, et dans lequel la première thermistance (5) ne limite pas le courant à travers l'enroulement auxiliaire (3), dans lequel un circuit de démarrage (8, 9 ou 8, 9') est connecté de manière commutable à un condensateur de démarrage (8) pour générer un déphasage dans l'enroulement auxiliaire (3) avec l'enroulement auxiliaire (3), dans lequel un premier commutateur (6) est prévu pour shunter la première thermistance (5) après achèvement du processus de démarrage, dans lequel un second commutateur (10) est prévu pour couper le circuit de démarrage (8, 9 ou 8, 9'), dans lequel il est prévu un agencement de commande (11) pour l'ouverture et la fermeture en fonction du temps des premier et second commutateurs (6, 10), **caractérisé en ce que** ce circuit de démarrage est muni, en série avec le condensateur (8), d'une thermistance PTC (9) ou d'une seconde thermistance (9') pour limiter les crêtes de courant capacitives à travers le condensateur de démarrage (8), et **en ce que** l'agencement de commande (11) est conçu de telle sorte que le second commutateur (10) puisse être actionné avant le premier commutateur (6).

2. Dispositif selon la revendication 1, avec un condensateur de service (7) pour générer un déphasage dans l'enroulement auxiliaire (3) par rapport à l'enroulement principal (4) dans l'état de fonctionnement, **caractérisé en ce que** la capacité du condensateur de démarrage (8) est dimensionnée de telle sorte que la valeur de sa capacité soit supérieure à la valeur de capacité du condensateur de service (7).

3. Dispositif selon la revendication 2, **caractérisé en ce que** la valeur de la capacité du condensateur de démarrage (8) est au moins deux fois supérieure à la valeur de la capacité du condensateur de service (7).

4. Dispositif selon la revendication 2, **caractérisé en ce que** la valeur de la capacité du condensateur de démarrage (8) est de trois à cinq fois supérieure à la valeur de la capacité du condensateur de service (7).

5. Dispositif selon une plusieurs des revendications précédentes **caractérisé en ce que** la première thermistance (5) présente une résistance à froid de 10 à 30 Ω.

6. Procédé pour réduire le courant de démarrage lors de la mise en marche d'un moteur asynchrone à courant alternatif monophasé (M), dans lequel, à l'allumage, le courant traversant l'enroulement principal du moteur est réduit par une première thermistance (5), dans lequel un déphasage au démarrage dans un enroulement auxiliaire (3) du moteur pendant le processus de démarrage est généré par un condensateur de démarrage (8) et que par une résistance, le courant traversant le condensateur de démarrage (8) est réduit au moment de la mise sous tension et après le démarrage du moteur, la première thermistance (5) est shuntée au moyen d'un premier interrupteur (6), **caractérisé en ce que** le shunt est activé lorsque le régime nominal est atteint et la résistance et le condensateur de démarrage (8) sont déconnectés du circuit lorsque le fonctionnement nominal est atteint au moyen d'un second commutateur (10), avant que la première thermistance (5) ne soit shuntée au moyen du premier interrupteur (6).

7. Procédé selon la revendication 6, **caractérisé en ce que** en atteignant le régime nominal, le patinage du rotor du moteur cesse.

8. Procédé selon la revendication 6 ou 7, **caractérisé en ce que** pendant le processus de démarrage, le courant dans l'enroulement principal (4) est continuellement augmenté, tandis que le courant à travers le condensateur de démarrage (8) et le degré de déphasage par le condensateur de démarrage (8) sont de plus en plus réduits.

9. Procédé selon une des revendications 8 à 10, **caractérisé en ce que** la résistance est formée par une thermistance PTC (9) ou une seconde thermistance (9').
